(19) **Europäisches Patentamt European Patent Office Office européen des brevets**

(11) **EP 4 303 824 B1**

(12) **EUROPEAN PATENT SPECIFICATION**

(45) Date of publication and mention of the grant of the patent:
**26.03.2025 Bulletin 2025/13**

(51) International Patent Classification (IPC):
**G06V 10/82** (2022.01)     **G06V 10/94** (2022.01)
**G06V 20/20** (2022.01)     **G06V 20/64** (2022.01)
**G06V 40/10** (2022.01)     **G06V 40/20** (2022.01)

(21) Application number: **22183425.2**

(22) Date of filing: **06.07.2022**

(52) Cooperative Patent Classification (CPC):
**G06V 40/103; G06V 10/82; G06V 10/95; G06V 20/20; G06V 20/647; G06V 40/23**

(54) **SYSTEM AND METHOD FOR MONITORING A BODY POSE OF A USER**

SYSTEM UND VERFAHREN ZUR ÜBERWACHUNG DER KÖRPERHALTUNG EINES BENUTZERS

SYSTÈME ET PROCÉDÉ DE SURVEILLANCE D'UNE POSE CORPORELLE D'UN UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2024 Bulletin 2024/02**

(73) Proprietor: **Cyberhuman Limited Cambridge CB23 5BQ (GB)**

(72) Inventors:
• **Bohné, Thomas**
  **Cambridge CB23 5BQ (GB)**
• **Helmich, Jan**
  **Cambridge CB2 8BW (GB)**
• **Tombling, James**
  **Alton GU34 1RX (GB)**

(74) Representative: **Betten & Resch Patent- und Rechtsanwälte PartGmbB Maximiliansplatz 14 80333 München (DE)**

(56) References cited:
**US-A1- 2017 273 639     US-A1- 2021 174 700**

• WANG YUAN ET AL: "New multi-view human motion capture framework", IET IMAGE PROCESSING, IET, UK, vol. 14, no. 12, 16 October 2020 (2020-10-16), pages 2668 - 2674, XP006092917, ISSN: 1751-9659, DOI: 10.1049/ IET-IPR.2019.1606

• MARTIN FISCH ET AL: "Orientation Keypoints for 6D Human Pose Estimation", ARXIV.ORG, CORNELL UNIVERSITY LIBRARY, 201 OLIN LIBRARY CORNELL UNIVERSITY ITHACA, NY 14853, 10 September 2020 (2020-09-10), XP081760069

• YU ZHENBO ET AL: "Skeleton2Mesh: Kinematics Prior Injected Unsupervised Human Mesh Recovery", 2021 IEEE/CVF INTERNATIONAL CONFERENCE ON COMPUTER VISION (ICCV), IEEE, 10 October 2021 (2021-10-10), pages 8599 - 8609, XP034093074, DOI: 10.1109/ ICCV48922.2021.00850

• SENGUPTA AKASH ET AL: "Probabilistic 3D Human Shape and Pose Estimation from Multiple Unconstrained Images in the Wild", 2021 IEEE/ CVF CONFERENCE ON COMPUTER VISION AND PATTERN RECOGNITION (CVPR), IEEE, 20 June 2021 (2021-06-20), pages 16089 - 16099, XP034007997, DOI: 10.1109/ CVPR46437.2021.01583

• FIERARU MIHAI ET AL: "AIFit: Automatic 3D Human-Interpretable Feedback Models for Fitness Training", 2021 IEEE/CVF CONFERENCE ON COMPUTER VISION AND PATTERN RECOGNITION (CVPR), IEEE, 20 June 2021 (2021-06-20), pages 9914 - 9923, XP034009945, DOI: 10.1109/CVPR46437.2021.00979

• HAORAN XIE ET AL: "CoreUI: Interactive Core Training System with 3D Human Shape", ARXIV.ORG, CORNELL UNIVERSITY LIBRARY, 201 OLIN LIBRARY CORNELL UNIVERSITY ITHACA, NY 14853, 17 June 2021 (2021-06-17), XP081990929

- **WU ERWIN ET AL: "FuturePose - Mixed Reality Martial Arts Training Using Real-Time 3D Human Pose Forecasting With a RGB Camera", 2019 IEEE WINTER CONFERENCE ON APPLICATIONS OF COMPUTER VISION (WACV), IEEE, 7 January 2019 (2019-01-07), pages 1384 - 1392, XP033525631, DOI: 10.1109/WACV.2019.00152**
- **AHUJA KARAN ET AL: "ControllerPose: Inside-Out Body Capture with VR Controller Cameras", CHI CONFERENCE ON HUMAN FACTORS IN COMPUTING SYSTEMS, 27 April 2022 (2022-04-27), New York, NY, USA, pages 1 - 13, XP055956505, ISBN: 978-1-4503-9157-3, Retrieved from the Internet <URL:https://dl.acm.org/doi/10.1145/3491102.3502105> DOI: 10.1145/3491102.3502105**
- **ZANFIR ANDREI ET AL: "Deep network for the integrated 3D sensing of multiple people in natural images", ADVANCES IN NEURAL INFORMATION PROCESSING SYSTEMS, 1 January 2018 (2018-01-01), US, pages 8410, XP093131518, ISSN: 1049-5258, Retrieved from the Internet <URL:https://proceedings.neurips.cc/paper_files/paper/2018/file/6a6610feab86a1f294dbbf5855c74af9-Paper.pdf> [retrieved on 20240214]**

**Description**

TECHNICAL FIELD

The present invention relates to systems and methods for monitoring a body pose of a user. In particular, the present invention relates to systems and methods for processing human pose estimation data into an accurate avatar representation.

BACKGROUND

Human pose estimation from video plays a critical role in various applications such as quantifying physical exercises, sign language recognition, and full-body gesture control. For example, it can form the basis for fitness applications.

Human Pose Estimation (HPE) is a way of identifying and classifying the joints in the human body. Essentially, it is a way to capture a set of coordinates for each joint (arm, head, torso, etc.,) which is known as a key point that can describe a pose of a person. The connection between these points is known as a pair. The connection formed between the points has to be significant, which means not all points can form a pair. From the outset, the aim of HPE is to form a skeleton-like representation of a human body and then process it further for task-specific applications. Human pose estimation is usually performed based on swallow machine learning algorithms or deep-learning.

Even though plenty of HPE algorithms are state-of-the-art, there is no solution available for generating and displaying a digital twin of a user in augmented, virtual, and mixed reality, wherein the digital twin mimics the poses of the user in real-time.

The underlying problem of the present invention can therefore be regarded as how to create a system and method for generating an identical digital twin of a user, wherein the digital twin mimics the body movements of the user in real time.

In accordance with the invention, said problem is solved by a system and method according to an apparatus as claimed in claim 1 and a method as claimed in claim 9.

Document WANG YUAN ET AL: "New multi-view human motion capture framework", IET IMAGE PROCESSING, JET, UK, vol. 14, no. 12, 16 October 2020 (2020-10-16), pages 2668-2674, XP006092917, ISSN: 1751-9659, DOI: 10.1049/IET-IPR.2019.1606, discloses a method for estimating human pose and shape without markers.

Document MARTIN FISCH ET AL: "Orientation Keypoints for 6D Human Pose Estimation", ARXIV.ORG, CORNELL UNIVERSITY LIBRARY, 201 OLIN LIBRARY CORNELL UNIVERSITY ITHACA, NY 14853, 10 September 2020 (2020-09-10), XP081760069, discloses a method for estimating the position and rotation of skeletal joints, using single-frame RGB images.

Document YU ZHENBO ET AL: "Skeleton2-Mesh: Kinematics Prior Injected Unsupervised Human Mesh Recovery", 2021 IEEE/CVF INTERNATIONAL CONFERENCE ON COMPUTER VISION (ICCV), IEEE, 10 October 2021 (2021-10-10), pages 8599-8609, XP034093074, DOI: 10.1109/ICCV48922.2021.00850, discloses a framework that recovers human mesh from a single image.

Document SENGUPTA AKASH ET AL: "Probabilistic 30 Human Shape and Pose Estimation from Multiple Unconstrained Images in the Wild", 2021 IEEE/CVF CONFERENCE ON COMPUTER VISION AND PATTERN RECOGNITION (CVPR), IEEE, 20 June 2021 (2021-06-20), pages 16089-16099, XP034007997, DOI: 10.1109/CVPR46437.2021.01583, discloses a method for shape and pose estimation from a group of multiple images of a human subject.

Document FIERARU MIHAI ET AL: "AIFit: Automatic 3D Human-Interpretable Feedback Models for Fitness Training", 2021 IEEE/CVF CONFERENCE ON COMPUTER VISION AND PATTERN RECOGNITION (CVPR), IEEE, 20 June 2021 (2021-0620), pages 9914-9923, XP034009945, DOI: 10.1109/CVPR46437.2021.00979 discloses a system that performs 3D human sensing for fitness training.

Document HAORAN XIE ET AL: "CoreUI: Interactive Core Training System with 3D Human Shape", ARXIV.ORG, CORNELL UNIVERSITY LIBRARY, 201 OLIN LIBRARY CORNELL UNIVERSITY ITHACA, NY 14853, 17 June 2021 (2021-06-17), XP081990929, discloses a skinned multi-person linear model of human shape to recover the 3D human pose from 2D images using pose estimation and human mesh recovery approaches.

Document WU ERWIN ET AL: "FuturePose - Mixed Reality Martial Arts Training Using Real-Time 3D Human Pose Forecasting With a RGB Camera", 2019 IEEE WINTER CONFERENCE ON APPLICATIONS OF COMPUTER VISION (WACV), IEEE, 7 January 2019 (2019-01-07), pages 1384-1392, XP033525631, DOI:10.1109NVACV.2019.00152 discloses a system based on 3D pose estimation using a residual neural network with input from a RGB camera, which captures the motion of a trainer.

Document AHUJA KARAN ET AL: "Controller-Pose: Inside-Out Body Capture with VR Controller Cameras", CHI CONFERENCE ON HUMAN FACTORS IN COMPUTING SYSTEMS, 27 April 2022 (2022-0427), pages 1-13, XP055956505, New York, NY, USA DOI:10.1145/3491102.3502105 ISBN: 978-1-4503-9157-3 discloses a method for capturing user body pose in virtual reality experiences.

Document US 2021/174700 A1 discloses methods and systems for multi-player training of body-eye coordination using mobile computing devices each having a camera.

Document US 2017/273639 A1 discloses a device for imaging a body.

Document Zanfir Andrei ET AL: "Deep network for the integrated 3D sensing of multiple people in natural images", ADVANCES IN NEURAL INFORMATION PROCESSING SYSTEMS, vol. 2018-December, 1 January 2018 (2018-01-01), page 8410, XP093131518, US ISSN:1049-5258discloses a 3D pose and shape estimation of multiple people in monocular images.

SUMMARY

A summary of various aspects of the present disclosure is hereinafter presented to provide a basic understanding of these aspects and their associated advantages. Further aspects and technical details are covered in the subsequent chapter entitled "detailed description".

The present disclosure is directed to provide a system for processing, transferring and accurately displaying human pose and movement data within augmented, virtual, and mixed reality using head-mounted displays in real-time. The invention is set out in the independent claims. The dependent claims define embodiments of the invention.

According to one aspect a system for monitoring a body pose of a user comprises: a data processing module, which is configured to perform in real-time or quasi real-time the steps of: receiving 2D (i.e. two dimensional) image data of the user performing the body pose, optionally detecting the body of the user on the 2D image data, extracting 2D key point coordinates of the detected body from the 2D image data using machine learning algorithms, estimating 3D (i.e. three dimensional) key point coordinates from the extracted 2D key point coordinates using machine learning algorithms, transforming the estimated 3D key point coordinates into a rotation-based representation, and outputting the rotation-based representation.

This system desirably generates and outputs the rotation-based representation of the user in real-time. The rotation-based rendering contains the rotation information of the joints in compact form and enables the transmission of the information in real time. The information necessary to render the avatar representation on a rendering machine like a displaying module is contained in a single file comprising the rotation-based representation. Moreover, said information is advantageously already in a form which corresponds to an anatomically realistic skeleton form. Therefore, rendering a digital twin (i.e. reconstructing a virtual avatar) requires less computational resources (i.e. computing power), and is thus possible on a displaying module which is an end user device (e.g. s smartphone). Anyway, in spite of such limited computational resources, the whole procedure (i.e. from receiving the 2D image data until displaying a virtual avatar) may be performed in real-time or quasi real-time. The term "quasi real-time" processing may be understood as a processing operation which comprises a very short delay, e.g. a few milli seconds due to data transmission, which however is not perceivable for a user. Anyway, also the term "real-time" processing may be understood covering such very short delays.

According to another aspect, the 2D image data may be provided by a camera that takes 2D images of the user.

This has the advantage that the system can also be run on any computing device with an HD webcam as long as the system requirements are met.

According to another aspect the estimated 3D key point coordinates may form a first set of 3D key point coordinates. The data processing module may be further configured to perform the step of transposing the first set of 3D key point coordinates into a second set of 3D key point coordinates. Accordingly, in the step of transforming the second set of estimated 3D key point coordinates may be transformed into the rotation-based representation of the user.

The first set of estimated 3D key point coordinates may represent motion capture (mocap) key points. The second set of 3D key point coordinates may represent more anatomical key points, i.e. anatomically more realistic (or more suitable) representation of the user. Hence, the step of transposing has the advantage that also the outputted rotation-based representation of the user becomes closer to the real anatomy of the user. As a consequence, reconstructing a realistic virtual avatar (i.e. a virtual twin) of the user becomes computationally less expensive, in particular on the side of the displaying module (i.e. an end user device, as e.g. a smartphone, tablet, AR glasses, or other mobile device). The real-time (or quasi real-time) requirement can thus be fulfilled.

The term "transposing" may be understood as transferring the points of the first set to the context of the second set (i.e. a more anatomical representation of the user).

According to another aspect, the data processing module may be further configured to send the rotation-based representation over a network to a displaying module using a real-time or quasi real-time capable data transfer protocol.

This ensures that the rotation-based representation can be further processed in real-time or quasi real-time.

According to another aspect, the displaying module may be configured to perform in real-time or quasi real-time the steps of: receiving the rotation-based representation sent by the data processing module, reconstructing a virtual avatar representation of the user performing the body pose of the user based on the rotation-based representation received, and displaying the virtual avatar representation of the user in a virtual environment of the user.

According to another aspect, the virtual avatar representation of the user may be a to scale virtual twin of the user.

This makes it easier for the user to put himself in the virtual avatar's place, so that he/she can, for example, follow the exercises in fitness applications in a more targeted manner.

According to another aspect, the displaying module can be an AR headset worn by the user, and wherein the virtual environment is generated in AR.

According to another aspect, the 2D key point coordinates can be joint locations of the body of the user.

According to another aspect, transforming of the estimated 3D key point coordinates into a rotation-based representation comprises: determining 3D joint rotations from the estimated 3D key point coordinates, and storing the 3D joint rotations as a list.

This transformation of the key point coordinates into a rotation-based representation unambiguously describes the pose of the user and allows the system to transfer the information in real-time or quasi real-time to the displaying module. The displaying module can reconstruct an avatar for displaying in a particularly fast and efficient manner from the information transformed and obtained in this manner.

According to another aspect, the displaying module may be further configured to perform the steps of: providing a user interface, receiving a selection of a target pose, which is selected by the user on the user interface, sending an identifier to the processing module, wherein the identifier identifies the selected target pose.

According to another aspect, the processing module is further configured to perform in real-time or quasi real-time the steps of: receiving the identifier, loading a rotation-based representation corresponding to the target pose identified by the identifier from a memory, comparing the target rotation-based representation corresponding to the target pose with the rotation-based representation of the user, generating feedback data from the comparison; sending the feedback data to the displaying module, wherein the displaying module displays the feedback data to the user.

According to another aspect, the displaying module may further perform the steps of: reconstructing a virtual avatar representation of an instructor performing the target pose based on the rotation-based representation corresponding to the target pose sent by the processing module, and displaying the virtual avatar representation of the instructor in the virtual environment of the user.

Displaying the instructor avatar next to the user's self-avatar gives the user an idea of how far or close the user is from mimicking the target pose.

According to another aspect, the displaying module may be further configured to perform the steps of: receiving the feedback data, wherein the feedback data comprises suggestions for modifications of the pose of the user and the rotation-based representation corresponding to the target pose, and displaying the feedback data to the user.

This provides the user with information on how to improve the body pose in a very targeted way.

According to another aspect, the comparison is based at least on one of: comparing joint locations of the target pose with joint locations of the body pose and generating a score from their distances; calculating global rotations of joints; calculating local rotations of joints of the target pose and the body pose and comparing their differences; and/or calculating bone vectors of the target pose and the body pose and comparing their differences.

According to another aspect a method for monitoring a body pose of a user in real-time or quasi real-time, comprises the steps of: receiving, by a data processing module, 2D image data of the user performing the body pose, detecting, by a data processing module, the body of the user on the 2D image data, extracting, by a data processing module, 2D key point coordinates of the detected body from the 2D image data using machine learning algorithms, estimating, by a data processing module, 3D key point coordinates from the extracted 2D key point coordinates using machine learning algorithms, transforming, by a data processing module, the estimated 3D key point coordinates into a rotation-based representation, outputting, by a data processing module, the rotation-based representation.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

BRIEF DESCRIPTION OF THE DRAWINGS

The foregoing summary and the following detailed description of preferred embodiments will be more readily understood if read in conjunction with the accompanying drawing. To illustrate the invention, the drawing shows exemplary details of the embodiments described. The information shown in the drawing is exemplary and explanatory only and does not limit the claimed invention.

The present invention is described in detail below with reference to the accompanying drawing:

Fig. 1 is an example block chart of a method for generating an avatar representation of the user.

Fig. 2 is an example diagram of the system setup.

Fig. 3 is a first set of 3D key point coordinates according to the present disclosure showing an exemplary skeleton of a user.

Fig. 4a is second set of 3D key point coordinates according to the present disclosure showing the exemplary skeleton of fig. 3a according to a first exemplary visual representation.

Fig. 4b is second set of 3D key point coordinates according to the present disclosure showing the exemplary skeleton of fig. 3a according to a second exemplary visual representation.

DETAILED DESCRIPTION

Reference will now be made in detail to examples of the disclosure, examples of which are illustrated in the accompanying drawings. Wherever possible, the same reference numbers will be used throughout the drawings to refer to the same or like parts.

The present invention relates to a system and method for processing human pose estimation data into accurate avatar representation and animation file format. The invention processes, transfers and accurately displays human pose and movement data in a virtual environment of the user. The virtual twin of the user is displayed in accurate size and mimics the body motion of the user in real-time.

The purpose of the system is to demonstrate full body poses using a virtual human avatar (from here on the instructor) that is displayed in real life size using augmented reality (AR) glasses in conjunction with a single camera motion capture approach that tracks the user's posture in real time and provides feedback through rendering a mirror image (from here on self-avatar) of the user, also in real life size through the AR glasses.

A pose describes the body's position at one moment in time with a set of skeletal landmark points. The landmarks correspond to different body parts such as the shoulders and hips. The relative positions of landmarks can be used to distinguish one pose from another. By pose the configuration of human bones in order to reconstruct a 3D skeleton representing the 3D posture of the detected human is meant.

The fundamental process is as follows: A target pose is selected, and the AR glasses render instructor in the pose over the existing surrounding of the user. The user can study the target pose and, if space permits, walk around the instructor to investigate the pose. When the user returns to its original position, a self-avatar will be rendered which displays the users' movements in real time like a mirror image. As the user moves and adjusts its posture, so does the self-avatar. The purpose of the self-avatar is to give the user an idea of how close or far he is from mimicking the instructor. Using the instructor and the self-avatar, the task for the user is now to approximate the instructors pose through changes to his body posture as closely as possible. In the background, a continuous loop will evaluate and compare the posture of the user, in particular the skeleton of the extracted self-avatar, to the instructor. This loop will also feed all the information that is required for rendering the self-avatar to the AR glasses through creating a file with all necessary information. If the chosen metric of success is reached at any point in time or for a specified length of time, the pose will be counted as executed successful and feedback will be provided through a pop-up in the AR environment of the user's field of view. Additional feedback could be rendered.

Options to compare the posture of the user and the instructor include (a) comparing the absolute distances between joint centers and deriving a proximity score from them, (b) comparing the local rotations of joints, so the relationship between one bone and the next between the two skeletons to evaluate how individual bones are angled differently between the instructor and the user, and (c) comparing the global rotations which define the total orientation relative to the global coordinate system.

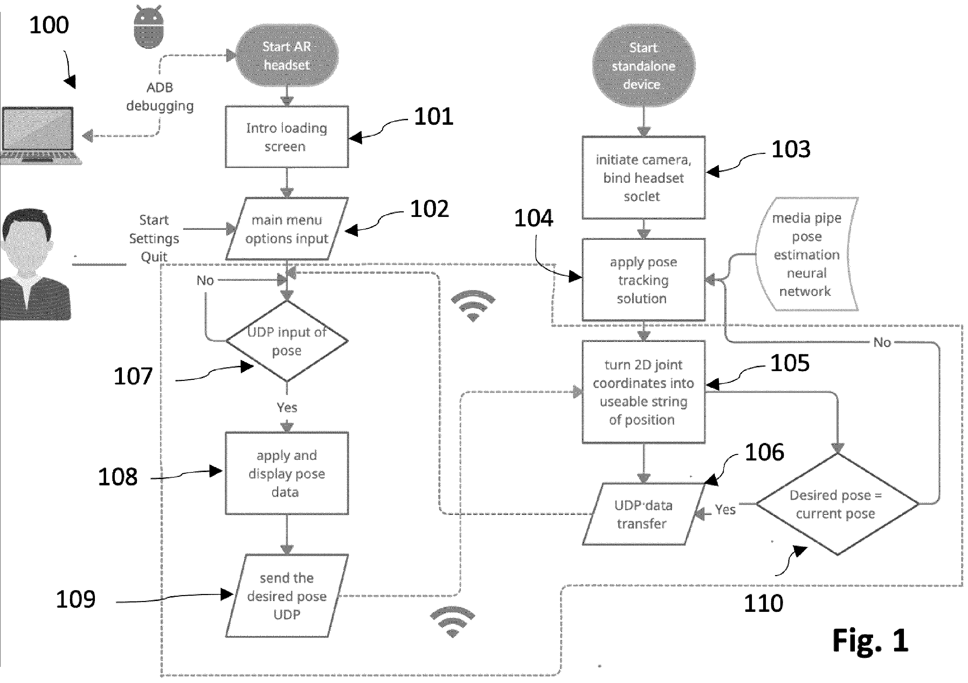

Fig. 1 is an example block chart of a method 100 for generating an avatar representation of the user and comparing the body pose of the user and self-avatar to a target or desired posture.

The method starts when both the AR headset, the displaying module, and the standalone device, the processing device, are turned on with the apps running and are connected to the same local wifi, then the AR headset will launch a loading screen 101 and main menu 102, while the standalone system launches the camera feed and binds to the set wifi socket 103. The standalone system then applies 104 the pose estimation algorithm to the camera feed and stores 105 the subsequent data of the joints in a string which is then sent 106 via User Datagram Protocol (UDP) to the headset, this is done multiple times per second. The headset application is constantly checking 107 the input socket for the data string, which then applies and displays 108 to the user experience followed by sending 109 a data string back to the standalone device (UDP) of the desired pose position. The standalone system then checks 110 the pose of the person is the same as the desired pose through comparing their joint rotations and generates feedback from this data. All of this can be seen in Figure 1. The comparison and feedback generation is performed based on (a) comparing joint locations in 3D space and generating a score from their distances, (b) calculating global rotations of joints, and/or (c) calculating local rotations of joints and comparing their differences.

Preferably a method for monitoring a body pose of a user in real-time or quasi-real time performs the following steps:

Receiving, by a data processing module, 2D image data of the user performing the body pose, wherein the 2D image data is generated for example by a HD webcam.

Detecting, by a data processing module, the body of the user on the 2D image data.

Extracting, by the data processing module, 2D key point coordinates of the detected body from the 2D image data using machine learning algorithm(s). For example, the machine learning algorithm(s) may comprise a Neural Network , in particular a Convolutional Neural Network (CNN). The machine learning algorithm may be trained to identify the key points or features in the 2D space of the image. The key points are for example joint locations and/or facial features like mouth, ears, and eyes.

Estimating, by the data processing module, corresponding 3D key point coordinates from the extracted 2D key point coordinates of the image using machine learning algorithms or any other state-of-the-art algorithm. For example, the 3D key points or 3D coordinates corresponding to the identified 2D key points may be obtained by statistically fitting a (predefined) synthetic human shape model to the 2D key points. The 3D key point coordinates may form a skeleton of the user. The 3D key point coordinates may also be extracted by using a single machine learning algorithm for example based on a neural network like a CNN.

Transforming, by a data processing module, the estimated 3D key point coordinates into a rotation-based representation. This involves calculating rotations from the extracted 3D coordinates. Given any three 3-D points *X, Y, Z* which are connected by vectors $\overrightarrow{XY}$ and $\overrightarrow{YZ}$, a rotation matrix R can be calculated which when applied to $\overrightarrow{XY}$ rotates the vector to the same orientation as $\overrightarrow{YZ}$.

*R* may be calculated as follows:

$$a = \frac{\overrightarrow{XY}}{\left\|\overrightarrow{XY}\right\|}$$

$$b = \frac{\overrightarrow{YZ}}{\left\|\overrightarrow{YZ}\right\|}$$

$$v = a \times b$$

$$s = \parallel v \parallel$$

$$c = a \cdot b$$

$$R = I + [v]_x + [v]_x^2 \frac{1-c}{s^2}$$

$$[v]_x \stackrel{\text{def}}{=} \begin{bmatrix} 0 & -v_3 & v_2 \\ v_3 & 0 & -v_1 \\ -v_2 & v_1 & 0 \end{bmatrix}$$

From the rotation matrix R other rotation-based formats like quaternions or Euler rotations ca be derived easily. As such, the described process can be used to extract rotations from any set of three 3-D coordinate points. A caveat to note is that the described equation for R works unless *a* = - b since this would result in a division by zero. In the practical application of this system, this edge case can never be encountered as it would mean that one bone is inversely pointing into the previous one (which should naturally be regarded as an anatomical impossibility).

Outputting, by a data processing module, the rotation-based representation. The output from the data processing module is the rotation-based skeleton, which reflects the posture of the user in real time. In essence, this is a list of rotations for each joint and coordinates of each key point, which unambiguously describes the body pose of the user and can be used to reconstruct an avatar to take the same pose. The specific format in which those are transferred can be in either a raw data string or a more structured file format like FBX or glTF.

The list of rotation-based representation may contain one entry for each joint in the target skeleton of the human. This rotation may for example describe the change required relative to the previous bone to accurately mimic the pose of the tracked avatar. As such, the rotations and bone lengths alone can be used to accurately reconstruct the entire pose of the skeleton.

The method may further comprise the step of sending, by the data processing module, the rotation-based representation of the user over a network to a displaying module using a real-time or quasi real-time capable data transfer protocol. Such a protocol is for example UDP, which has a comparative speed relative to TCP/IP. However, other protocols would be suitable as long as the overhead delay is kept low to enable real time applications.

In response to receiving the rotation-based representation of the user sent by the data processing module over the network, the displaying module may perform in real-time or quasi real-time the steps of:

Reconstructing a virtual avatar representation of the user performing the body pose of the user based on the rotation-based representation of the user received. For example, this is done by applying the rotations, which is the quasi representation of the movement, to a rigged avatar model in a standard pose. The skeleton may be manipulated by setting the bones in relation to each other according to the joint rotations contained in the rotation-based representation. As such, the skeleton of the avatar will accurately reflect the pose recorded by the rotations. The model will adjust its outer appearance through the simulation of its surface according to its underlying skeleton.

Displaying the virtual avatar representation of the user in a virtual environment of the user. The virtual avatar rendered in the virtual environment of the user is a self-avatar of the user displaying the users' movements in real time like a mirror image. As the user moves and adjusts its posture, so does the self-avatar. Preferably the self-avatar has the same body proportions as the user. The virtual environment is generated in augmented reality (AR), extended reality (MX), or virtual reality (VR).

In a further embodiment, the displaying module is further configured to additionally perform the steps of: Providing a user interface on the displaying module, wherein the user interface comprises a choice of different target poses and/or a choice of different fitness programs and workouts. The target pose is a posture that the user intends to imitate.

Receiving a selection of a target pose, wherein the user selects the target pose on the user interface. It is also an option for the system to select target postures on its own, depending on whether a particular fitness program is being performed. If a pose counts as successfully performed by the user, the system may automatically select the next pose according to the chosen workout or if a set number of repetitions of an exercise is reached.

Sending an identifier to the processing module, wherein the identifier identifies the selected target pose.

The processing module may then in response to receiving the identifier perform the following steps: Loading a rotation-based representation corresponding to the target pose identified by the identifier from a memory.

Comparing the target rotation-based representation corresponding to the target pose with the rotation-based representation of the user. The focus is on comparing the joint rotations between the observed user pose and the target pose. The FBX file format is a structured rotation-based representation for animations. Individual joint rotations can be extracted from the file and compared to raw data. Comparing both 3D models is based on at least one of comparing joint locations of the target pose with joint locations of the body pose and generating a score from their distances, calculating global rotations of joints, calculating local rotations of joints of the target pose and the body pose and comparing their differences, and/or calculating bone vectors of the target pose and the body pose and comparing their differences.

An angle comparison in degrees or radians to match the desired silhouettes angles with a buffer of fixed values on either side of each joint angle is the best generic technique. Local rotations in Euler angles can be used in a 3D rendering engine to accomplish this. Any method of generating a posture in the 3D rendering engine can be used to achieve the required stance (e.g. FBX file format). There is another technique to compare poses in general terms, which is to compare joint locations rather than angles. There are a number of ways to do either of these. However, some 3D rendering systems use snap boxes to compare an object's location until it falls within a particular range. This is commonly utilized in augmented reality, virtual reality, and video games.

Based on the comparison of the rotation-based representations, the processing module continues by generating feedback data from the comparison. Options for feedback include the visual discrepancy between the target pose skeleton and the users skeleton; color highlighting of individual joints and bones; visual highlighting of target angle ranges; as well as textual information on required angle adjustments of individual bones.

Finally, sending the feedback data to the displaying module, wherein the displaying module displays the feedback data to the user.

In one embodiment the processing module sends the rotation-based representation that corresponds to the selected target pose to the displaying module. The displaying module reconstructs a virtual avatar of an instructor performing the selected target pose from the rotation-based representation selected by the user. The instructor avatar can be rendered next to the user's self-avatar or instructor avatar and self-avatar can be overlaid depending on user preference.

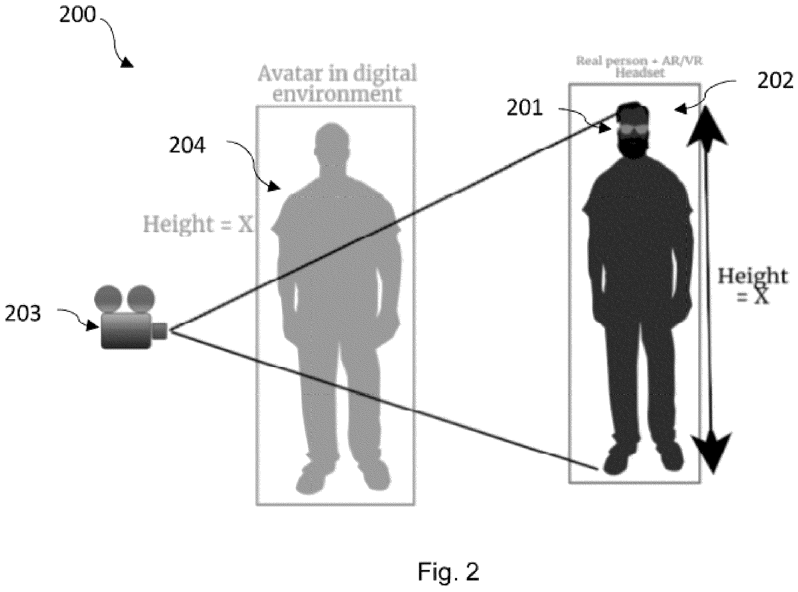

Fig. 2 shows an example diagram of the system setup.

The system 200 includes a displaying module 201, which in this example is a VR/AR headset worn by the user 202, and a processing module (not shown). A camera 203 captures images of the user 202, which are then processed by the processing module as previously described and sent to the display module 201. The display module 201 renders a self-avatar representation of the user 202 in a virtual environment of the user 202 based on the data it receives from the processing module. The processing module may be configured to carry out the method of the present disclosure. In particular, it may be configured to execute a machine learning algorithm and generate the rotation-based representation of extracted 3D key point coordinates, as described above. The processing model may have or be connected to a data storage which stores the machine learning algorithm.

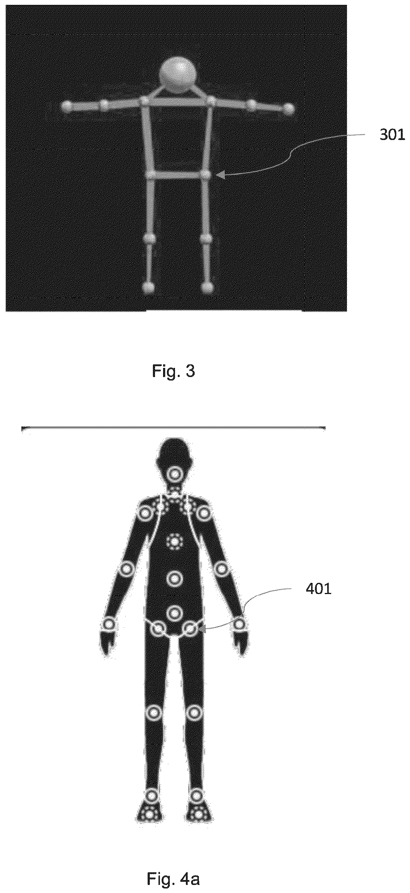

Fig. 3 is an example of a first set of 3D key point coordinates according to the present disclosure showing an exemplary skeleton of a user..

Fig. 4a is second set of 3D key point coordinates according to the present disclosure showing the exemplary skeleton of fig. 3a according to a first exemplary visual representation.

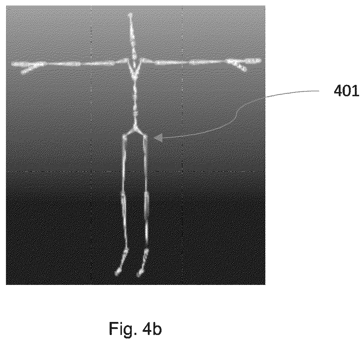

Fig. 4b is second set of 3D key point coordinates according to the present disclosure showing the exemplary skeleton of fig. 3a according to a second exemplary visual representation.

The comparison between fig. 3 with fig. 4a and 4b highlights the discrepancy between the utilized key points in a MOCAP system (cf. the first set) and the required key points for the displaying and animation of the virtual avatar on a displaying module.

The first set (i.e. a Machine Learning tracking point list for body of the user) may comprise at least (or at least some of) the following key points 301 (cf. also fig. 3):

0. Left shoulder

1. Right shoulder

2. Left elbow

3. Right elbow

4. Left wrist

5. Right wrist

6. Left pinkie

7. Right pinkie

8. Left index

9. Right index

10. Left thumb

11. Right thumb

12. Left hip

13. Right hip

14. Left knee

15. Right knee

16. Left ankle

17. Right ankle

18. Left heel

19. Right heel

20. Left foot index

21. Right foot index

In comparison, the second set (i.e. an Animation Skeleton structure for body of the user) may comprise at least (or at least some of) the following key points 401 (cf. also fig. 4a, 4b):

0. Hips

1. Spine

2. Chest

3. Right Upper chest

4. Right Shoulder

5. Right Upper arm

6. Right Lower arm

7. Right Hand

8. Left Upper Chest

9. Lest Shoulder

10. Left Upper Arm

11. Left Lower arm

12. Left Hand

13. Right Upper Leg

14. Right Lower Leg

15. Right Foot

16. Right Toes

17. Left Upper Leg

18. Left Lower Leg

19. Left Foot

20. Left Toes

Accordingly, for example separate point lists exist for the head and hands. While the head differs as well, the hand tracking may be generally very similar. Key differences for the body tracking are found in the presence of only a four-point body box between two shoulders and two hip points while the animation requires a more detailed representation of multiple points along the spine as well as a centre hip point to reflect anatomical changes along the spine. The transposition (or translation) between the two sets, e.g. by triangulating and fitting the spine, is one of the key achievements of the system of the present disclosure.

Furthermore, transposing the first set (of tracked features from the Mocap application) to the second set (of features used in e.g. known animation engines) in real-time or quasi real-time is a further key achievements of the system of the present disclosure.

Although the present disclosure herein has been described with reference to particular examples, it is to be understood that these examples are merely illustrative of the principles and applications of the present disclosure.

It is intended that the specification and examples be considered as exemplary only, with a true scope of the invention being indicated by the following claims.

**Claims**

1. A system (200) for monitoring a body pose of a user (202), the system (200) comprising:

a data processing module, which is configured to perform in real-time or quasi real-time the steps of:

receiving 2D image data of the user (202) performing the body pose;

extracting 2D key point coordinates of a detected body from the 2D image data using machine learning, wherein the 2D key point coordinates are joint locations of the body of the user;

estimating 3D key point coordinates from the extracted 2D key point coordinates using machine learning;

transforming the estimated 3D key point coordinates into a rotation-based representation of the user (202), which is a list containing one entry for each joint, each entry comprising a 3D joint rotation of the joint and the 3D coordinates of the joint;

outputting the rotation-based representation of the user;

further comprising a displaying module which is configured to perform the steps of:

providing a user interface;

receiving a selection of a target pose, which is selected by the user on the user interface; and

sending an identifier to the data processing module, wherein the identifier identifies the selected target pose; and

wherein the data processing module is further configured to perform in real-time or quasi real-time the steps of:

receiving the identifier;

loading a rotation-based representation corresponding to the target pose identified by the identifier from a memory;

comparing the rotation-based representation corresponding to the target pose with the rotation-based representation of the user, wherein the comparison includes:

comparing 3D joint coordinates of the target pose with the 3D joint coordinates of the body pose and generating a score from their distances; and

comparing 3D joint rotations of the target pose with the 3D joint rotations of the body pose;

generating feedback data from the comparison, the feedback data representing a discrepancy between the target pose and the body pose of the user and, wherein the feedback data provides feedback by:

color highlighting of individual joints and bones; and/or

highlighting of target angle ranges;

sending the feedback data to the displaying module, wherein the displaying module displays the feedback data to the user.

2. The system (200) of claim 1, wherein the estimated 3D key point coordinates form a first set of 3D key point coordinates, and

the data processing module is further configured to perform the step of transposing the first set of 3D key point coordinates into a second set of 3D key point coordinates,

wherein, in the step of transforming, the second set of estimated 3D key point coordinates is transformed into the rotation-based representation of the user (202).

3. The system (200) of any one of claims 1 or 2, wherein the data processing module is further configured to perform the step of sending the rotation-based representation of the user (202) over a network to a displaying module (201) using a real-time or quasi real-time capable data transfer protocol.

4. The system (200) of claim 3, wherein the displaying module (201) is configured to perform in real-time or quasi real-time the steps of:

receiving the rotation-based representation of the user (202) sent by the data processing module;

reconstructing a virtual avatar representation of the user (202) performing the body pose of the user (202) based on the rotation-based representation of the user (202) received; and

displaying the virtual avatar representation of the user (202) in a virtual environment of the user (202).

5. The system according to claim 4, wherein the virtual avatar representation of the user (202) is a to scale virtual twin of the user (202).

6. The system according to any one of the previous claims 4 or 5, wherein the displaying module (201) is an AR headset, a smartphone display, as they have a limited processing power, or any other display worn by the user (202), and the virtual environment is generated in AR.

7. The system (200) of claim 1, wherein the displaying module (201) further perform the steps of:

reconstructing a virtual avatar representation of an instructor performing the target pose based on the rotation-based representation corresponding to the target pose sent by the processing module; and

displaying the virtual avatar representation of the instructor in the virtual environment of the user (202).

8. The system (200) of any one of the previous claim 1 or claim 7, wherein the displaying module (201) is further configured to perform the steps of:

receiving the feedback data, wherein the feedback data comprises suggestions for modifications of the body pose of the user (202) and the rotation-based representation corresponding to the target pose; and
displaying the feedback data to the user (202).

9. A method for monitoring a body pose of a user (202) in real-time or quasi real-time, the method comprising the steps of:

providing, by a displaying module (201), a user interface;
receiving, by the displaying module (201), a selection of a target pose, which is selected by the user (202) on the user interface;
sending, by the displaying module (201), an identifier to a data processing module, wherein the identifier identifies the selected target pose;
receiving, by the data processing module, 2D image data of the user (202) performing the body pose;
extracting, by the data processing module, 2D key point coordinates of a detected body from the 2D image data using machine learning, wherein the 2D key point coordinates are joint locations of the body of the user;
estimating, by the data processing module, 3D key point coordinates from the extracted 2D key point coordinates using machine learning;
transforming, by the data processing module, the estimated 3D key point coordinates into a rotation-based representation of the user (202), which is a list containing one entry for each joint, each entry comprising a 3D joint rotation of the joint and the 3D coordinates of the joint;
outputting, by the data processing module, the rotation-based representation of the user;
receiving, by the data processing module, the identifier from the displaying module (201);
loading, by the data processing module, a rotation-based representation corresponding to the target pose identified by the identifier from a memory;
comparing, by the data processing module, the rotation-based representation corresponding to the target pose with the generated rotation-based representation of the user (202), wherein the comparison includes:

comparing 3D joint coordinates of the target pose with the 3D joint coordinates of the body pose and generating a score from their distances; and
comparing 3D joint rotations of the target pose with the 3D joint rotations of the body pose;

generating, by the data processing module, feedback data from the comparison, the feedback data representing a discrepancy between the target pose and the body pose of the user (202) and, wherein the feedback data provides feedback by:

color highlighting of individual joints and bones; and/or
highlighting of target angle ranges;

sending, by the data processing module, the feedback data to the displaying module (201), wherein the displaying module (201) displays the feedback data to the user (202).

10. The method of claim 9 further comprising any one of the steps performed by the system of any one of claims 2 to 8.

**Patentansprüche**

1. System (200) zum Überwachen einer Körperhaltung eines Benutzers (202), wobei das System (200) umfasst:
   ein Datenverarbeitungsmodul, das konfiguriert ist zum Durchführen in Echtzeit oder in quasi Echtzeit der Schritte:

Empfangen von 2D-Bilddaten des Benutzers (202), der die Körperhaltung durchführt;
Extrahieren von 2D-Schlüsselpunktkoordinaten eines detektierten Körpers aus den 2D-Bilddaten unter Verwendung von maschinellem Lernen, wobei die 2D-Schlüsselpunktkoordinaten Gelenkpositionen des Körpers des Benutzers sind;
Schätzen von 3D-Schlüsselpunktkoordinaten aus den extrahierten 2D-Schlüsselpunktkoordinaten unter Verwendung von maschinellem Lernen;
Transformieren der geschätzten 3D-Schlüsselpunktkoordinaten in eine rotationsbasierte Darstellung des Benutzers (202), die eine Liste ist, die einen Eintrag für jedes Gelenk enthält, wobei jeder Eintrag eine 3D-Gelenkrotation des Gelenks und die 3D-Koordinaten des Gelenks umfasst;

Ausgeben der rotationsbasierten Darstellung des Benutzers;

ferner umfassend ein Anzeigemodul, das konfiguriert ist zum Durchführen der Schritte:

Bereitstellen einer Benutzerschnittstelle;

Empfangen einer Auswahl einer Zielhaltung, die von dem Benutzer auf der Benutzerschnittstelle ausgewählt ist; und

Senden eines Identifikators an das Datenverarbeitungsmodul, wobei der Identifikator die gewählte Zielhaltung identifiziert; und

wobei das Datenverarbeitungsmodul ferner konfiguriert ist zum Durchführen in Echtzeit oder in Quasi-Echtzeit der Schritte:

Empfangen des Identifikators;

Laden einer rotationsbasierten Darstellung, die der Zielhaltung entspricht, die durch den Identifikator identifiziert ist, aus einem Speicher;

Vergleichen der rotationsbasierten Darstellung, die der Zielhaltung entspricht, mit der rotationsbasierten Darstellung des Benutzers, wobei der Vergleich enthält:

Vergleichen von 3D-Gelenkkoordinaten der Zielhaltung mit den 3D-Gelenkkoordinaten der Körperhaltung und Erzeugen einer Punktzahl aus deren Distanzen; und

Vergleichen von 3D-Gelenkrotationen der Zielhaltung mit den 3D-Gelenkrotationen der Körperhaltung;

Erzeugen von Rückmeldungsdaten aus dem Vergleich, wobei die Rückmeldungsdaten eine Diskrepanz zwischen der Zielhaltung und der Körperhaltung des Benutzers darstellen, und wobei die Rückmeldungsdaten eine Rückmeldung bereitstellen durch:

farbliches Hervorheben von einzelnen Gelenken und Knochen; und/oder Hervorheben von Zielwinkelbereichen;

Senden der Rückmeldungsdaten an das Anzeigemodul, wobei das Anzeigemodul die Rückmeldungsdaten dem Benutzer anzeigt.

2. System (200) nach Anspruch 1, wobei die geschätzten 3D-Schlüsselpunktkoordinaten einen ersten Satz von 3D-Schlüsselpunktkoordinaten bilden, und

das Datenverarbeitungsmodul ferner konfiguriert ist zum Durchführen des Schrittes des Transponierens des ersten Satzes von 3D-Schlüsselpunktkoordinaten in einen zweiten Satz von 3D-Schlüsselpunktkoordinaten, wobei, im Schritt des Transponierens, der zweite Satz von geschätzten 3D-Schlüsselpunktkoordinaten in die rotationsbasierte Darstellung des Benutzers (202) transformiert wird.

3. System (200) nach einem der Ansprüche 1 oder 2, wobei das Datenverarbeitungsmodul ferner konfiguriert ist zum Durchführen des Schrittes des Sendens der rotationsbasierten Darstellung des Benutzers (202) über ein Netzwerk an ein Anzeigemodul (201), unter Verwendung eines echtzeit- oder quasiechtzeitfähigen Datentransferprotokolls.

4. System (200) nach Anspruch 3, wobei das Anzeigemodul (201) konfiguriert ist zum Durchführen in Echtzeit oder Quasi-Echtzeit der Schritte:

Empfangen der rotationsbasierten Darstellung des Benutzers (202), die von dem Datenverarbeitungsmodul gesendet ist;

Rekonstruieren einer virtuellen Avatar-Darstellung des Benutzers (202), der die Körperhaltung des Benutzers (202) durchführt, basierend auf der empfangenen rotationsbasierten Darstellung des Benutzers (202); und

Anzeigen der virtuellen Avatar-Darstellung des Benutzers (202) in einer virtuellen Umgebung des Benutzers (202).

5. System nach Anspruch 4, wobei die virtuelle Avatar-Darstellung des Benutzers (202) ein maßstabsgetreuer virtueller Zwilling des Benutzers (202) ist.

6. System nach einem der vorhergehenden Ansprüche 4 oder 5, wobei das Anzeigemodul (201) ein AR-Headset, ein Smartphone-Display, da diese eine begrenzte Rechenleistung aufweisen, oder irgendein anderes Display, das vom Benutzer (202) getragen wird, ist, und die virtuelle Umgebung in AR erzeugt ist.

7. System (200) nach Anspruch 1, wobei das Anzeigemodul (201) ferner die Schritte:

Rekonstruieren einer virtuellen Avatar-Darstellung eines Instrukteurs, der die Zielhaltung durchführt, basierend auf der rotationsbasierten Darstellung, die der Zielhaltung entspricht, die von dem Verarbeitungsmodul geschickt ist; und

Anzeigen der virtuellen Avatar-Darstellung des Instrukteurs in der virtuellen Umgebung des Benutzers (202);

durchführt.

8. System (200) nach einem der vorhergehenden Ansprüche 1 oder 7, wobei das Anzeigemodul (201) ferner konfiguriert ist zum Durchführen der Schritte:

Empfangen der Rückmeldungsdaten, wobei die Rückmeldungsdaten Empfehlungen für Änderungen der Körperhaltung des Benutzers (202) umfassen, und die rotationsbasierte Darstellung, die der Zielhaltung entspricht; und Anzeigen der Rückmeldungsdaten an den Benutzer (202).

9. Verfahren zum Überwachen einer Körperhaltung eines Benutzers (202) in Echtzeit oder Quasi-Echtzeit, wobei das Verfahren die Schritte:

Bereitstellen, durch ein Anzeigemodul (201), einer Benutzerschnittstelle; Empfangen, durch das Anzeigemodul (201), einer Auswahl einer Zielhaltung, die von dem Benutzer (202) auf der Benutzerschnittstelle ausgewählt ist; Senden, durch das Anzeigemodul (201), eines Identifikators an ein Datenverarbeitungsmodul, wobei der Identifikator die gewählte Zielhaltung identifiziert; und Empfangen, durch das Datenverarbeitungsmodul, von 2D-Bilddaten des Benutzers (202), der die Körperhaltung durchführt;

Extrahieren, durch das Datenverarbeitungsmodul, von 2D-Schlüsselpunktkoordinaten eines detektierten Körpers aus den 2D-Bilddaten unter Verwendung von maschinellem Lernen, wobei die 2D-Schlüsselpunktkoordinaten Gelenkpositionen des Körpers des Benutzers sind; Schätzen, durch das Datenverarbeitungsmodul, von 3D-Schlüsselpunktkoordinaten aus den 2D-Schlüsselpunktkoordinaten unter Verwendung von maschinellem Lernen; Transformieren, durch das Datenverarbeitungsmodul, der geschätzten 3D-Schlüsselpunktkoordinaten in eine rotationsbasierte Darstellung des Benutzers (202), die eine Liste ist, die einen Eintrag für jedes Gelenk enthält, wobei jeder Eintrag eine 3D-Gelenkrotation des Gelenks und die 3D-Koordinaten des Gelenks umfasst; Ausgeben, durch das Datenverarbeitungsmodul, der rotationsbasierten Darstellung des Benutzers; Empfangen, durch das Datenverarbeitungsmodul, des Identifikators von dem Anzeigemodul (201); Laden, durch das Datenverarbeitungsmodul, einer rotationsbasierten Darstellung, die der Zielhaltung entspricht, die durch den Identifikator identifiziert ist, aus einem Speicher; Vergleichen, durch das Datenverarbeitungsmodul, der rotationsbasierten Darstellung, die der Zielhaltung entspricht, mit der erzeugten rotationsbasierten Darstellung des Benutzers (202), wobei der Vergleich enthält:

Vergleichen von 3D-Gelenkkoordinaten der Zielhaltung mit den 3D-Gelenkkoordinaten der Körperhaltung und Erzeugen einer Punktzahl aus deren Distanzen; und Vergleichen von 3D-Gelenkrotationen der Zielhaltung mit den 3D-Gelenkrotationen der Körperhaltung;

Erzeugen, durch das Datenverarbeitungsmodul, von Rückmeldungsdaten aus dem Vergleich, wobei die Rückmeldungsdaten eine Diskrepanz zwischen der Zielhaltung und der Körperhaltung des Benutzers (202) darstellen, und wobei die Rückmeldungsdaten Rückmeldung bereitstellen durch:

farbliches Hervorheben von einzelnen Gelenken und Knochen; und/oder Hervorheben von Zielwinkelbereichen;

Senden, durch das Datenverarbeitungsmodul, der Rückmeldungsdaten an das Anzeigemodul (201), wobei das Anzeigemodul (201) die Rückmeldungsdaten dem Benutzer (202) anzeigt;

umfasst.

10. Verfahren nach Anspruch 9, ferner umfassend irgendeinen der Schritte, die von dem System nach einem der Ansprüche 2 bis 8 durchgeführt werden.

## Revendications

1. Un système (200) de surveillance d'une posture corporelle d'un utilisateur (202), le système (200) comprenant :
un module de traitement de données, qui est configuré pour exécuter en temps réel ou quasi-temps réel les étapes consistant à :

recevoir des données d'image 2D de l'utilisateur (202) se mettant dans la posture corporelle ;

extraire des coordonnées de points clés 2D d'un corps détecté à partir des données d'image 2D en utilisant l'apprentissage automatique, les coordonnées de points clés 2D étant des emplacements d'articulations du corps de l'utilisateur ; estimer des coordonnées de points clés 3D à partir des coordonnées de points clés 2D extraites en utilisant l'apprentissage automatique ; transformer les coordonnées de points clés 3D estimées en une représentation de l'utilisateur basée sur une rotation (202), qui est une liste contenant une entrée pour chaque articulation, chaque entrée comprenant une rotation d'articulation 3D de l'articulation et les coordonnées 3D de l'articulation ; émettre la représentation de l'utilisateur basée sur une rotation ; comprenant en outre un module d'affichage qui est configuré pour exécuter les étapes consistant à :

fournir une interface utilisateur ; recevoir une sélection d'une posture cible, qui est sélectionnée par l'utilisateur sur l'interface utilisateur ; et envoyer un identifiant au module de traitement de données, l'identifiant identifiant la posture cible sélectionnée ; et

le module de traitement de données étant en outre configuré pour effectuer en temps réel ou quasi-temps réel les étapes consistant à :

recevoir l'identifiant ; charger une représentation basée sur la rotation correspondant à la posture cible identifiée par l'identifiant à partir d'une mémoire ; comparer la représentation basée sur la rotation correspondant à la posture cible avec la représentation de l'utilisateur basée sur une rotation, la comparaison comprenant :

le fait de comparer les coordonnées articulaires 3D de la posture cible avec les coordonnées articulaires 3D de la posture corporelle et de générer un score à partir de leurs distances ; et le fait de comparer les rotations articulaires 3D de la posture cible avec les rotations articulaires 3D de la posture corporelle ;

générer des données de rétroaction à partir de la comparaison, les données de rétroaction représentant une divergence entre la posture cible et la posture corporelle de l'utilisateur, les données de rétroaction fournissant une rétroaction par :

mise en surbrillance en couleur des articulations et des os individuels ; et/ou mise en surbrillance de gammes d'angles cibles ;

envoyer les données de rétroaction au module d'affichage, le module d'affichage affichant les données de rétroaction à l'utilisateur.

2.  Le système (200) selon la revendication 1, dans lequel les coordonnées de points clés 3D estimées forment un premier ensemble de coordonnées de points clés 3D, et

le module de traitement de données est en outre configuré pour mettre en œuvre l'étape de transposition du premier ensemble de coordonnées de points clés 3D en un deuxième ensemble de coordonnées de points clés 3D ; à l'étape de transformation, le deuxième ensemble de coordonnées de points clés 3D estimées est transformé en la représentation de l'utilisateur basée sur une rotation (202).

3.  Le système (200) selon l'une quelconque des revendications 1 ou 2, dans lequel le module de traitement de données est en outre configuré pour effectuer l'étape d'envoi de la représentation de l'utilisateur basée sur une rotation (202) sur un réseau à un module d'affichage (201) en utilisant un protocole de transfert de données apte à fonctionner en temps réel ou quasi-temps réel.

4.  Le système (200) selon la revendication 3, dans lequel le module d'affichage (201) est configuré pour effectuer en temps réel ou quasi-temps réel les étapes consistant à :

recevoir la représentation de l'utilisateur basée sur une rotation (202) envoyée par le module de traitement de données ; reconstruire une représentation d'avatar virtuel de l'utilisateur (202) se mettant dans la posture corporelle d'utilisateur (202) sur la base de la représentation de l'utilisateur basée sur une rotation (202) reçue ; et afficher la représentation d'avatar virtuel de l'utilisateur (202) dans un environnement virtuel de l'utilisateur (202).

5.  Le système selon la revendication 4, dans lequel la représentation d'avatar virtuel de l'utilisateur (202) est un jumeau virtuel de l'utilisateur (202), à l'échelle.

6.  Le système selon l'une quelconque des revendications précédentes 4 ou 5, dans lequel le module d'affichage (201) est un casque RA (à réalité augmentée), un écran de smartphone, car ils ont une puissance de traitement limitée, ou tout autre écran porté par l'utilisateur (202), et l'environnement virtuel est généré en RA.

7.  Le système (200) selon la revendication 1, dans lequel le module d'affichage (201) met en œuvre, en outre, les étapes consistant à :

    reconstruire une représentation d'avatar virtuel d'un instructeur se mettant dans la posture cible sur la base de la représentation basée sur la rotation correspondant à la posture cible envoyée par le module de traitement ; et
    afficher la représentation d'avatar virtuel de l'instructeur dans l'environnement virtuel de l'utilisateur (202).

8.  Le système (200) selon l'une quelconque des revendications précédentes 1 ou 7, dans lequel le module d'affichage (201) est en outre configuré pour mettre en œuvre les étapes consistant à :

    recevoir les données de rétroaction, les données de rétroaction comprenant des suggestions de modifications de la posture corporelle de l'utilisateur (202) et de la représentation basée sur la rotation correspondant à la posture cible ; et
    afficher les données de rétroaction à l'utilisateur (202).

9.  Un procédé de surveillance d'une posture corporelle d'un utilisateur (202) en temps réel ou quasi-temps réel, le procédé comprenant les étapes consistant à :

    fournir, par un module d'affichage (201), une interface utilisateur ;
    recevoir, par le module d'affichage (201), sur l'interface utilisateur, une sélection d'une posture cible, qui est sélectionnée par l'utilisateur (202) ;
    envoyer, par le module d'affichage (201), un identifiant à un module de traitement de données, l'identifiant identifiant la posture cible sélectionnée ;
    recevoir, par le module de traitement de données, des données d'image 2D de l'utilisateur (202) se mettant dans la posture corporelle ;
    extraire, par le module de traitement de données, des coordonnées de points clés 2D d'un corps détecté à partir des données d'image 2D en utilisant l'apprentissage automatique, les coordonnées de points clés 2D étant des emplacements d'articulations du corps de l'utilisateur ;

    estimer, par le module de traitement de données, des coordonnées de points clés 3D à partir des coordonnées de points clés 2D extraites en utilisant l'apprentissage automatique ;
    transformer, par le module de traitement de données, les coordonnées estimées du point clé 3D en une représentation de l'utilisateur basée sur une rotation (202), qui est une liste contenant une entrée pour chaque articulation, chaque entrée comprenant une rotation articulaire 3D de l'articulation et les coordonnées 3D de l'articulation ;
    émettre, par le module de traitement de données, la représentation de l'utilisateur basée sur une rotation ;
    recevoir, par le module de traitement de données, l'identifiant du module d'affichage (201) ;
    charger, par le module de traitement de données, une représentation basée sur la rotation correspondant à la posture cible identifiée par l'identifiant à partir d'une mémoire ;
    comparer, par le module de traitement de données, la représentation basée sur la rotation correspondant à la posture cible avec la représentation basée sur la rotation générée de l'utilisateur (202), la comparaison comprenant :

    le fait de comparer les coordonnées articulaires 3D de la posture cible avec les coordonnées articulaires 3D de la posture corporelle et générer un score à partir de leurs distances ; et
    le fait de comparer les rotations articulaires 3D de la posture cible avec les rotations articulaires 3D de la posture corporelle ;

    générer, par le module de traitement de données, des données de rétroaction à partir de la comparaison, les données de rétroaction représentant une divergence entre la posture cible et la posture corporelle de l'utilisateur (202) et les données de rétroaction fournissant une rétroaction par :

    mise en surbrillance en couleur des articulations et des os individuels ; et/ou
    mise en surbrillance des gammes d'angles cibles ;

    envoyer, par le module de traitement de données, les données de rétroaction au module d'affichage (201), le module d'affichage (201) affichant les données de rétroaction à l'utilisateur (202).

10. Le procédé selon la revendication 9 comprenant en outre l'une quelconque des étapes mises en œuvre par le système selon l'une quelconque des revendi-

**EP 4 303 824 B1**

cations 2 à 8.

**Fig. 1**

Fig. 2

301

Fig. 3

401

Fig. 4a

401

Fig. 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021174700 A1
- US 2017273639 A1

**Non-patent literature cited in the description**

- New multi-view human motion capture framework. **WANG YUAN et al.** IET IMAGE PROCESSING. JET, 16 October 2020, vol. 14, 2668-2674
- Orientation Keypoints for 6D Human Pose Estimation. **MARTIN FISCH et al.** ARXIV.ORG. CORNELL UNIVERSITY LIBRARY, 10 September 2020
- Skeleton2Mesh: Kinematics Prior Injected Unsupervised Human Mesh Recovery. **YU ZHENBO et al.** 2021 IEEE/CVF INTERNATIONAL CONFERENCE ON COMPUTER VISION (ICCV). IEEE, 10 October 2021, 8599-8609
- Probabilistic 30 Human Shape and Pose Estimation from Multiple Unconstrained Images in the Wild. **SENGUPTA AKASH et al.** 2021 IEEE/CVF CONFERENCE ON COMPUTER VISION AND PATTERN RECOGNITION (CVPR). IEEE, 20 June 2021, 16089-16099
- AIFit: Automatic 3D Human-Interpretable Feedback Models for Fitness Training. **FIERARU MIHAI et al.** 2021 IEEE/CVF CONFERENCE ON COMPUTER VISION AND PATTERN RECOGNITION (CVPR). IEEE, 20 June 2021, 9914-9923
- CoreUl: Interactive Core Training System with 3D Human Shape. **HAORAN XIE et al.** ARXIV.ORG. CORNELL UNIVERSITY LIBRARY, 17 June 2021
- FuturePose - Mixed Reality Martial Arts Training Using Real-Time 3D Human Pose Forecasting With a RGB Camera. **WU ERWIN ET**. 2019 IEEE WINTER CONFERENCE ON APPLICATIONS OF COMPUTER VISION (WACV). IEEE, 07 January 2019, 1384-1392
- **AHUJA KARAN et al.** ControllerPose: Inside-Out Body Capture with VR Controller Cameras. *CHI CONFERENCE ON HUMAN FACTORS IN COMPUTING SYSTEMS*, 27 April 2022, ISBN 978-1-4503-9157-3, 1-13
- **ZANFIR ANDREI et al.** Deep network for the integrated 3D sensing of multiple people in natural images. *ADVANCES IN NEURAL INFORMATION PROCESSING SYSTEMS*, 01 January 2018, vol. 2018-December, ISSN 1049-5258, 8410